# FASCICULE DE BREVET EUROPEEN

(11) **EP 1 573 198 B1**
(45) Date de publication et mention de la délivrance du brevet: **14.06.2006**
(21) Numéro de dépôt: 03778476.6
(22) Date de dépôt: 28.10.2003
(51) Int. Cl.: F03C 1/247, F03C 1/24

(54) **POMPE OU MOTEUR HYDRAULIQUE**
HYDRAULIKPUMPE ODER -MOTOR
HYDRAULIC PUMP OR MOTOR

(30) Priorité: 29.10.2002 FR 0213504
(43) Date de publication de la demande: 14.09.2005
(73) Titulaire: POCLAIN HYDRAULICS INDUSTRIE, 60411 Verberie (FR)
(72) Inventeur: LEMAIRE, Gilles, F-60280 MARGNY (FR); BOZIC, Ante, F-60200 COMPIEGNE (FR); SOUPLY, Jean-Pierre, F-60300 SENLIS (FR)
(74) Mandataire: Intes, Didier Gérard André
(86) Numéro de dépôt international: PCT/FR2003/003197
(87) Numéro de publication internationale: WO 2004/040132

(56) Documents cités:
- DE-A- 10 033 264
- FR-A- 2 587 761
- US-A- 4 009 643

## Description

La présente invention concerne un mécanisme hydraulique tel qu'un moteur hydraulique ou une pompe comprenant une came et un bloc-cylindres aptes à tourner l'un par rapport à l'autre autour d'un axe de rotation, le bloc-cylindres présentant une pluralité de cylindres reliés par des conduits de cylindre à des orifices de communication disposés dans une face de communication du bloc-cylindres, des pistons montés coulissants dans les cylindres étant aptes à coopérer avec la came, le moteur comprenant en outre un distributeur de fluide, solidaire de la came vis-à-vis de la rotation autour de l'axe de rotation et ayant une face de distribution qui présente des orifices de distribution comprenant des orifices aptes à être reliés à une conduite d'alimentation et des orifices aptes à être reliés à une conduite d'échappement, lesdites faces de distribution et de communication étant en regard l'une de l'autre de manière à faire communiquer les orifices de communication et les orifices de distribution au cours de la rotation relative du bloc-cylindres et du distributeur.

La vitesse de rotation du rotor d'un tel moteur hydraulique est limitée par les pertes de charge qui se produisent dans le circuit d'alimentation du moteur et, en particulier, par celles qui se produisent dans le moteur lui-même. Parmi celles-ci, les pertes de charge qui se produisent dans la zone de distribution, c'est-à-dire à la liaison des orifices de communication et des orifices de distribution, sont les plus importantes.

En effet, au cours de la rotation du rotor, les orifices de communication et les orifices de distribution viennent progressivement en regard les uns des autres. Ainsi, la section de communication entre les orifices de communication et les orifices de distribution varie. Plus la variation de section en fonction du déplacement relatif des orifices de communication et de distribution est lente, plus la perte de charge est importante.

Pour limiter cette perte de charge, on a pensé à augmenter la section des orifices de distribution et de communication. Toutefois, cette solution présente certaines limites puisqu'elle nécessite que les faces de distribution et de communication aient des surfaces en regard suffisamment grandes. De plus, prévoir des orifices de dimensions importantes impose d'utiliser dans le moteur un palier capable de supporter des efforts importants. En effet, lorsqu'un orifice de distribution raccordé à l'alimentation de fluide se trouve en regard d'une zone pleine de la face de communication, il exerce sur cette dernière un effort important.

On a également pensé, comme par exemple dans FR-A-2 587 761, à donner à ces orifices une conformation particulière pour faire en sorte que la section de communication entre un orifice de communication et un orifice de distribution augmente très rapidement à partir du moment où ces deux orifices commencent à communiquer.

Cette solution donne de bons résultats, mais elle présente encore certaines limites.

La présente invention a pour but d'améliorer encore l'art antérieur précité pour favoriser la communication entre les conduits de distribution du distributeur et les conduits de cylindre, en limitant les pertes de charge dans la zone de distribution.

Ce but est atteint grâce au fait que au moins certains cylindres sont reliés à au moins deux orifices de communication espacés angulairement de telle sorte que lorsqu'un premier orifice de communication d'un tel cylindre communique avec un premier orifice de distribution relié à la conduite d'alimentation ou à la conduite d'échappement, un deuxième orifice de communication du même cylindre communique avec un deuxième orifice de distribution relié à la même conduite.

Par rapport aux moteurs de l'art antérieur dont chaque cylindre a un seul orifice de communication dans la face de communication, et si l'on considère que les dimensions des orifices de communication et de distribution sont inchangées, la section disponible pour l'alimentation ou l'échappement de fluide des cylindres du moteur de l'invention qui comportent deux orifices de communication est doublée. Ainsi, les pertes de charge sont considérablement réduites dans la zone de distribution et la vitesse de rotation du rotor du moteur peut être augmentée.

Avantageusement, la came présentant n lobes de came, l'espacement angulaire entre deux orifices de communication est sensiblement égal à un multiple de 360°/n, c'est-à-dire qu'il est égal à un multiple de 360°/n, aux tolérances de fabrication près.

Un moteur hydraulique dont la came présente n lobes et ayant une rangée de cylindres dont les pistons coopèrent avec cette came présente, dans la face de distribution, n orifices de distribution d'alimentation, espacés chacun de 360°/n et susceptibles d'être simultanément raccordés à la conduite d'alimentation, et n orifices de distribution d'échappement, également espacés chacun de 360°/n et susceptibles d'être simultanément raccordés à la conduite d'échappement. Les orifices de distribution d'alimentation et les orifices de distribution d'échappement sont intercalés. Si les lobes de came comportent chacun deux rampes, respectivement montante et descendante d'angles égaux, l'espacement angulaire entre un orifice de distribution d'alimentation et l'orifice de distribution d'échappement adjacent est égal à 360°/2n. Ainsi, dans un moteur de ce type, le choix d'un espacement angulaire sensiblement égal à un multiple de 360°/n entre les deux orifices de communication d'un même cylindre permet de faire en sorte que, au cours de la rotation du rotor, ces deux orifices soient reliés de la même manière, par les orifices de distribution, à l'alimentation ou à l'échappement.

Selon une disposition avantageuse, au moins certains cylindres sont reliés à deux orifices de communication qui sont situés sensiblement ou en grande partie dans une surface de la face de communication définie par la projection sur cette face, opérée parallèlement à l'axe de rotation, de deux génératrices du cylindre considéré opposées l'une de l'autre selon un plan diamétral dudit cylindre qui est perpendiculaire audit axe.

Selon cette disposition, les deux orifices de communication d'un même cylindre sont ainsi situés sensiblement ou en grande partie dans l'encombrement de ce cylindre, cet encombrement étant défini par la projection précitée. Ils sont donc très proches l'un de l'autre et débouchent dans le cylindre par simple perçage, parallèle à l'axe de rotation, ce qui facilite l'usinage des conduits de cylindre qui raccordent ces orifices de communication au cylindre considéré. On peut par exemple choisir de disposer les deux orifices de communication symétriquement par rapport à l'axe du cylindre et de réaliser les conduits de cylindre du cylindre considéré sous la forme de deux branches, symétriques par rapport à cet axe.

Cette possibilité de disposer les deux orifices de communication d'un même cylindre sensiblement ou en grande partie dans l'encombrement du cylindre existe en particulier lorsque le moteur présente un nombre de lobes de came supérieur au nombre de pistons, suffisant pour que le secteur angulaire couvert par l'encombrement du cylindre dans la région des orifices de communication soit au moins égal à 360°/n, où n représente le nombre de lobes de came.

De manière générale, il peut être avantageux de faire en sorte qu'au moins certains cylindres soient reliés à deux orifices de communication qui sont disposés symétriquement par rapport à un plan défini par l'axe du cylindre considéré et par l'axe de rotation. Ceci permet une réalisation symétrique des orifices de communication et des conduits de cylindre, que lesdits orifices de communication soient ou non disposés dans l'encombrement d'un cylindre.

Selon un mode de réalisation avantageux, chaque cylindre est relié à deux orifices de communication.

Les pertes de charge sont ainsi diminuées pour tous les cylindres du moteur.

Dans ce cas, avantageusement, l'espacement angulaire entre les deux orifices de communication d'un même cylindre est le même pour tous les cylindres.

Cette disposition simplifie l'usinage du bloc-cylindres.

Avantageusement, la came présentant n lobes de came, ledit espacement angulaire est égal à 360°/n.

Les deux orifices de communication d'un même cylindre sont ainsi rapprochés de manière à limiter les longueurs des conduits de cylindres.

L'invention s'applique à des moteurs ayant plusieurs cylindrées actives de fonctionnement.

Ainsi, avantageusement, la came présente plusieurs lobes de came comportant chacun une rampe montante et une rampe descendante associées chacune à un orifice de distribution, un lobe de came étant considéré comme actif lorsque l'orifice de distribution associé à sa rampe montante est relié à la conduite d'alimentation et lorsque l'orifice de distribution associé à sa rampe descendante est relié à la conduite d'échappement, le moteur présentant une grande cylindrée active de fonctionnement dans laquelle tous les lobes de came sont actifs et une petite cylindrée active de fonctionnement dans laquelle seuls certains lobes de came sont actifs ; les lobes de came qui sont actifs dans la petite cylindrée active de fonctionnement sont disposés de manière axisymétrique.

Ainsi, que le moteur fonctionne en petite cylindrée ou en grande cylindrée, les deux orifices de communication d'un cylindre dont le piston coopère à un instant donné avec un lobe de came actif, sont mis à la même pression en étant reliés à des orifices de distribution qui sont soit à la pression d'alimentation, soit à la pression d'échappement.

L'invention sera bien comprise, et ses avantages apparaîtront mieux à la lecture de la description détaillée qui suit, de modes de réalisation représentés à titre d'exemples non limitatifs.

La description se réfère aux dessins annexés, sur lesquels :
- la figure 1 est une coupe axiale d'un moteur hydraulique conforme à l'invention ;
- la figure 2 est une vue en coupe selon la ligne II-II, prise perpendiculairement à l'axe de rotation et dans la face de communication du bloc-cylindres, d'un moteur hydraulique conforme à l'invention ;
- les figures 3 et 4 sont des coupes respectivement selon les lignes III-III et IV-N de la figure 2 ;
- la figure 5 est une vue analogue à celle de la figure 2, pour une variante de réalisation ;
- la figure 6 est une vue analogue à celle de la figure 2, pour une autre variante ; et
- la figure 7 est une vue partielle, prise dans la même coupe que la figure 2, montrant encore une autre variante.

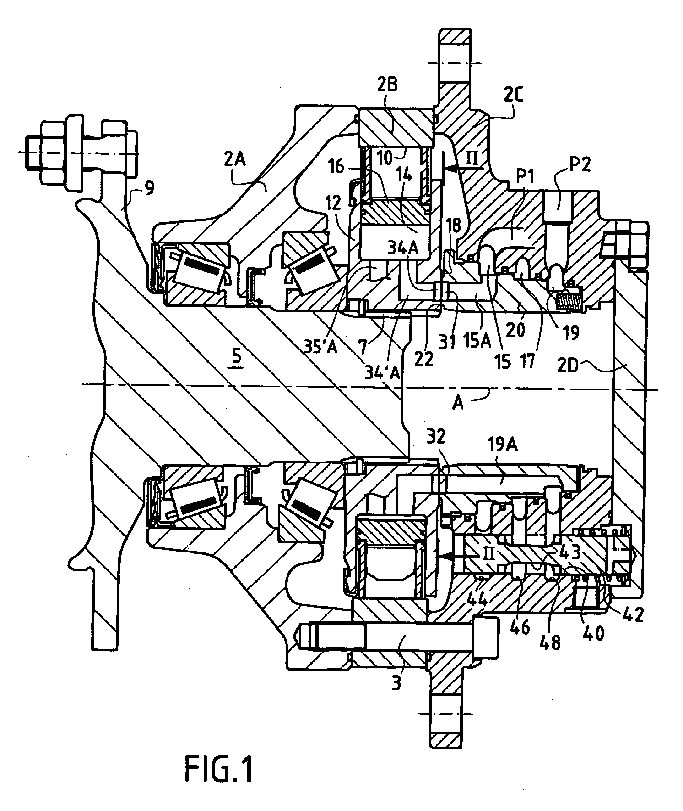

La figure 1 montre un moteur hydraulique comprenant un carter fixe en trois parties, 2A, 2B et 2C, assemblées par des vis 3.

Bien entendu, l'invention n'est pas limitée aux moteurs hydrauliques à carter fixe, mais elle s'applique également aux moteurs hydrauliques à carter tournant qui sont bien connus de l'homme du métier.

La partie 2C du carter est fermée axialement par une plaque radiale 2D également fixée par des vis. Une came de réaction ondulée 10 est réalisée sur la partie 2B du carter.

Le moteur comprend un bloc-cylindres 12 qui est monté à rotation relative autour d'un axe de rotation A par rapport à la came 10 et qui comporte une pluralité de cylindres radiaux 14, susceptibles d'être alimentés en fluide sous pression et à l'intérieur desquels sont montés coulissants les pistons radiaux 16.

Le bloc-cylindres 12 entraîne en rotation un arbre 5 qui coopère avec lui par des cannelures 7. Cet arbre porte une bride de sortie 9.

Le moteur comprend encore un distributeur interne de fluide 20 qui est solidaire du carter vis-à-vis de la rotation autour de l'axe A. Entre le distributeur 20 et la face axiale interne de la partie 2C du carter sont formées des gorges de distribution, respectivement une première gorge 15, une deuxième gorge 17 et une troisième gorge 19. Les conduits de distribution du distributeur 20 sont répartis en un premier groupe de conduits qui, comme le conduit 15A, sont tous reliés à la gorge 15, un deuxième groupe de conduits (non représentés) qui sont reliés à la gorge 17 et un troisième groupe de conduits qui, comme le conduit 19A, sont reliés à la gorge 19. La première gorge 15 est reliée à un premier conduit principal P1 auquel sont donc reliés tous les orifices de distribution des conduits de distribution du premier groupe, tels que l'orifice 31 du conduit 15A. La troisième gorge 19 est reliée à un deuxième conduit principal P2 auquel sont donc reliés tous les orifices de distribution des conduits du troisième groupe, tels que l'orifice 32 du conduit 19A.

Selon le sens de rotation du moteur, les conduits principaux P1 et P2 sont respectivement un conduit d'échappement et un conduit d'alimentation en fluide, ou l'inverse.

Les conduits de distribution débouchent dans une face de distribution 22 du distributeur 20, qui est en appui contre une face de communication 18 du bloc-cylindres. Chaque cylindre 14 a deux conduits de cylindre 34'A, 35'A qui débouchent dans la face de communication 18 de telle sorte que, lors de la rotation relative du bloc-cylindres et de la came, les conduits de cylindre sont alternativement en communication avec les conduits de distribution des différents groupes.

Le moteur de la figure 1 comporte encore un dispositif de sélection de la cylindrée qui, en l'espèce, comprend un alésage 40, qui s'étend axialement dans la partie 2C du carter et dans lequel est disposé un tiroir de sélection 42 axialement mobile. L'alésage 40 comprend trois voies de communication, respectivement 44, 46 et 48, qui sont respectivement reliées aux gorges 15, 17 et 19, par des conduits de liaison. Le tiroir 42 est mobile entre deux positions extrêmes à l'intérieur de l'alésage 40 dans lesquelles il fait communiquer les voies 44 et 46 ou les voies 46 et 48 par sa gorge 43.

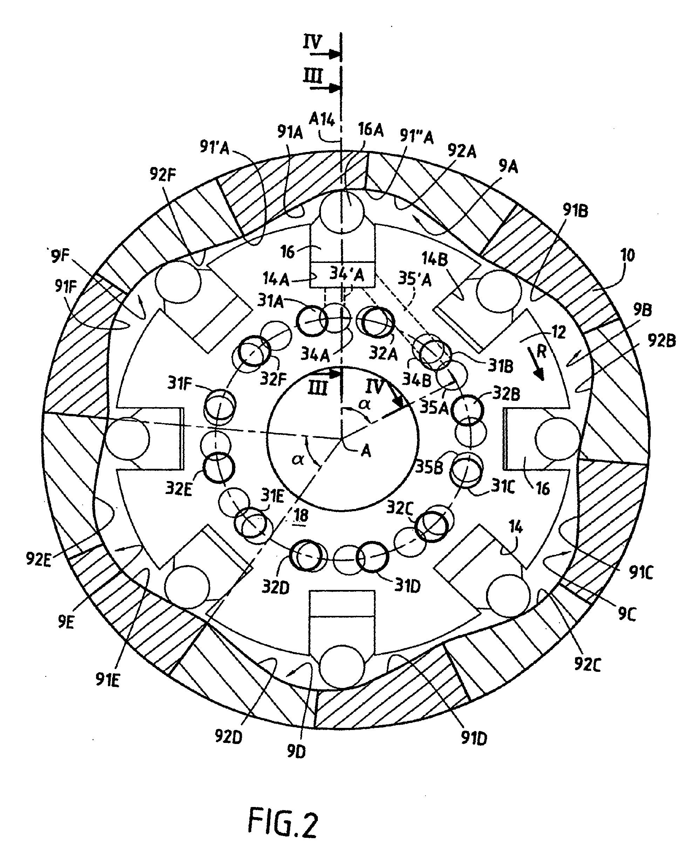

La coupe de la figure 1 est prise dans la face de communication 18 du bloc-cylindres, dans laquelle se trouvent les orifices de communication des conduits de cylindre, qui sont reliés, chacun, à un cylindre 14. Pour la clarté de la présente description, on a également indiqué les positions des orifices de distribution sur la figure 2, bien que ceux-ci ne se trouvent pas dans le plan de coupe.

De plus, bien qu'ils ne se trouvent pas dans le plan de coupe, les pistons et les cylindres sont représentés en traits pleins pour simplifier.

Comme on le voit sur la figure 1, la face de distribution 22 et la face de communication 18 sont disposées en regard l'une de l'autre. Les orifices de distribution et de communication étant situés à la même distance de l'axe A, ceci permet de faire communiquer ces orifices de communication et ces orifices de distribution au cours de la rotation relative du bloc-cylindres 12 et du distributeur 20.

Les figures 1 et 2 montrent un moteur à pistons radiaux et à distribution dite plane. En effet, les faces de communication et de distribution sont perpendiculaires à l'axe de rotation et sont toutes les deux planes. Dans un tel cas, lesdites faces de communication et de distribution sont maintenues en appui l'une contre l'autre, le distributeur étant sollicité en appui vers le bloc-cylindres. Toutefois, l'invention s'applique à d'autres types de moteurs, par exemple à des moteurs ayant une distribution cylindrique.

Comme on le voit sur la figure 2, la came 10 comprend plusieurs lobes de came, référencés 9A à 9F. Chaque lobe comprend une rampe montante, respectivement 91A à 91F et une rampe descendante, respectivement 92A à 92F. Ceci signifie que, lors de la rotation du bloc-cylindres dans le sens R par rapport à la came, les pistons 16 dont les galets 16A coopèrent avec une rampe montante se déplacent radialement vers l'extérieur, tandis que ceux dont les galets coopèrent avec une rampe descendante se déplacent radialement vers l'intérieur en rentrant dans leurs cylindres. A chaque rampe d'un lobe de came est associé un orifice de distribution. Ainsi, les orifices de distribution 31A à 31F sont respectivement associés aux rampes montantes 91A à 91F, tandis que les orifices de distribution 32A à 32F sont respectivement associés aux rampes descendantes 92A à 92F. Bien que la came soit réalisée en une seule pièce, et dans un souci de clarté, les rampes montantes et descendantes présentent des hachures différentes.

Dans l'exemple représenté, chaque cylindre est relié à la face de communication 18 par deux orifices de communication. Ainsi, le cylindre 14A dont le piston 16 coopère avec la rampe montante 91A du lobe de came 9A est relié à la face de communication 18 par un premier orifice de communication 34A, et également par un deuxième orifice de communication 35A. De même, le cylindre 14B dont le piston coopère avec la rampe montante 91B du lobe de came 9B est relié à la face de communication par un premier orifice de communication 34B et par un deuxième orifice de communication 35B.

En s'intéressant au cylindre 14A, on voit que son orifice de communication 34A communique avec l'orifice de distribution 31A et que, en même temps, son orifice de communication 35A communique avec l'orifice de distribution 31B. Ces deux orifices de distribution sont mis à la même pression ; en l'espèce, ils sont tous deux reliés à l'alimentation en fluide puisqu'ils sont associés à une rampe montante, respectivement 91A et 91B. On voit de plus que la section de communication entre l'orifice 34A et l'orifice 31A et la section de communication entre l'orifice 35A et l'orifice 31B sont les mêmes. Ainsi, le cylindre 14A est simultanément alimenté par le fluide provenant des orifices de distribution 31A et 31B et passant à travers les orifices de communication 34A et 35A au cours de la montée du piston 16 sur la rampe 91A, depuis son extrémité basse 91'A jusqu'à son extrémité haute 91"A. La communication entre l'orifice 34A et l'orifice 31A, de même que celle entre l'orifice 35A et l'orifice 31B commence lorsque le galet 16A de ce piston parvient au contact de l'extrémité basse 91'A et cesse lorsque ce galet parvient au contact de l'extrémité haute 91"A.

En l'espèce, chaque cylindre comporte deux orifices de communication et les explications qui précèdent sont valables pour tous les cylindres. Pour éviter de surcharger le dessin, on s'est toutefois contenté de repérer par des références numériques les orifices de communication 34A et 35A associés au cylindre 14A, et les orifices de communication 34B et 35B associés au cylindre 14B. Ces explications sont évidemment également valables s'agissant de la coopération d'un piston avec une rampe descendante et de la communication entre les orifices de communication du cylindre de ce piston et deux orifices de distribution reliés, tous deux, à la conduite d'échappement.

L'espacement angulaire α entre les deux orifices de communication 34A et 35A du cylindre 14A est choisi pour que, au cours de la rotation relative du bloc-cylindres et de la came, la communication entre ces orifices et deux orifices de distribution s'ouvre en même temps et se ferme en même temps.

La position angulaire des orifices de distribution par rapport aux lobes de la came est fixée, le distributeur de la came étant solidaire en rotation. Les orifices de distribution reliés à deux rampes montantes consécutives ou à deux rampes descendantes consécutives sont espacés d'une valeur égale à 360°/n où n représente le nombre de lobes de came. C'est pour cette raison que l'espacement angulaire α est égal à un multiple de 360°/n.

Cette condition est nécessaire pour que la communication des deux orifices de communication d'un même cylindre avec les deux orifices de distribution associés aux lobes d'une même came soit strictement synchronisée.

Pour chaque cylindre 14 de la figure 2, l'un des orifices de communication coupe un plan défini par l'axe du cylindre considéré et par l'axe de rotation. Ainsi, l'orifice 34A est centré sur l'axe A14 du cylindre 14A. Une disposition de ce type est classique pour des moteurs de l'art antérieur ne comportant qu'un seul orifice de communication par cylindre. En revanche, le deuxième orifice de communication 35A du cylindre est éloigné de l'axe A14.

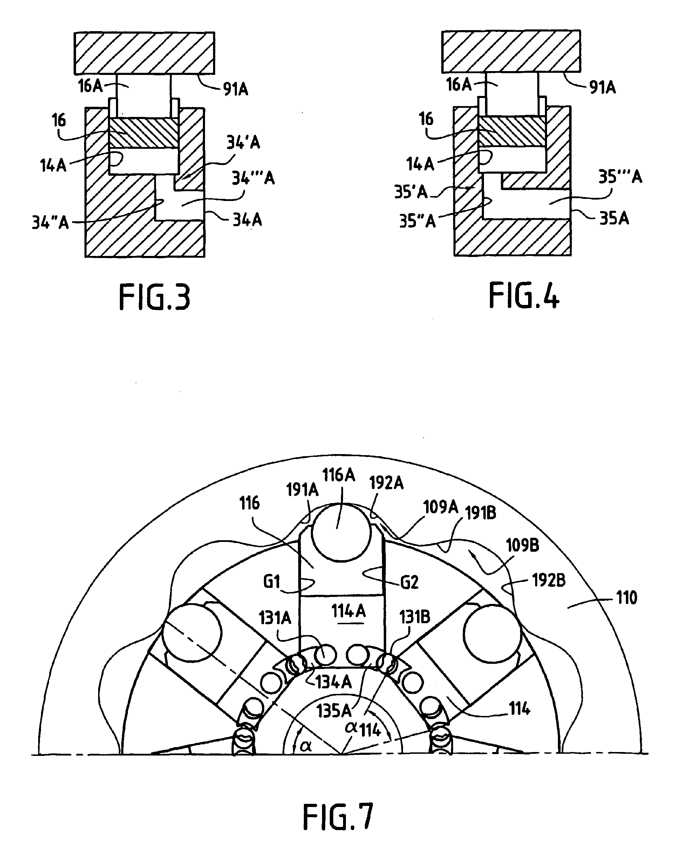

La figure 3 montre la configuration du conduit de cylindre 34'A qui relie l'orifice de communication 34A au cylindre 14A. Ce conduit est avantageusement réalisé de manière à avoir une conformation aussi simple que possible, et comprend par exemple un tronçon radial 34"A, qui part du fond du cylindre en se dirigeant vers l'axe de rotation A, et d'un tronçon axial 34"'A qui débouche à l'orifice de communication 34A.

La figure 4 montre la conformation du conduit de cylindre 35'A reliant le même cylindre 14A à son deuxième orifice de communication 35A. Ce conduit 35'A comporte un premier tronçon 35"A, qui est disposé en biais lorsqu'on le voit dans un plan parallèle à celui de la figure 2 de manière à couvrir l'espacement angulaire entre les orifices 34A et 35A, et qui est raccordé à un deuxième tronçon 35"'A qui est axial et qui débouche sur l'orifice de communication 35A.

On voit que les tronçons axiaux des conduits 34'A et 35'A n'ont pas la même longueur, de manière à éviter que les tronçons 34"A et 35"A ne se coupent. Pour simplifier la figure 2, les seuls conduits de cylindre dont la position est indiquée sont les conduits 34'A et 35'A.

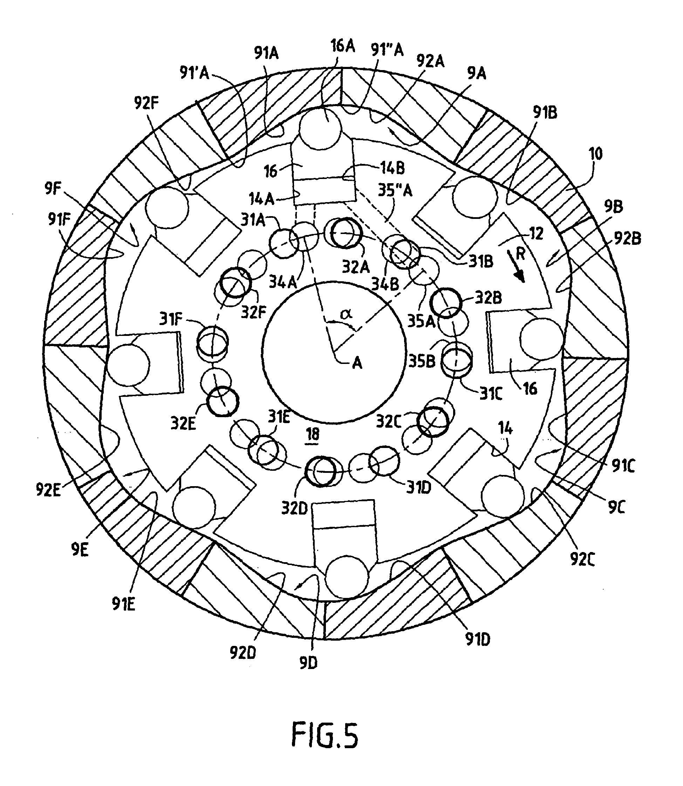

Sur la figure 5, les mêmes références que sur la figure 2 sont utilisées.

Chaque cylindre comporte deux orifices de communication, désignés par les références 34A et 35A pour le cylindre 14A. A la différence de la figure 2, aucun de ces deux orifices n'est situé sur l'axe de son cylindre. En effet, sur la figure 5, l'orifice 34A est légèrement décalé dans le sens inverse du sens R par rapport à l'orifice 34A de la figure 2. Toutefois, l'espacement angulaire α entre les deux orifices 34A et 35A d'un même cylindre est inchangé, et égal à 360°/n où n représente le nombre de lobes de came.

Les orifices de distribution sont également légèrement décalés dans le sens inverse du sens R par rapport à ceux de la figure 2. En effet, ce qui est important pour assurer le bon fonctionnement du moteur est que la communication entre un orifice de communication d'un cylindre, par exemple l'orifice 34A, et un orifice de distribution relié à l'alimentation en fluide, en l'espèce l'orifice 31A, s'ouvre lorsque, au cours de la rotation du bloc-cylindres dans le sens R par rapport à la came, le piston 16 du cylindre 14A considéré coopère avec l'extrémité basse 91'A de la rampe montante 91A du lobe de came auquel est associé l'orifice de distribution considéré et se ferme lorsque le même piston coopère avec l'extrémité haute 91"A de cette rampe. Le décalage angulaire qui existe entre les orifices de communication des figures 2 et 5 est donc le même que le décalage angulaire qui existe entre les orifices de distribution de ces figures.

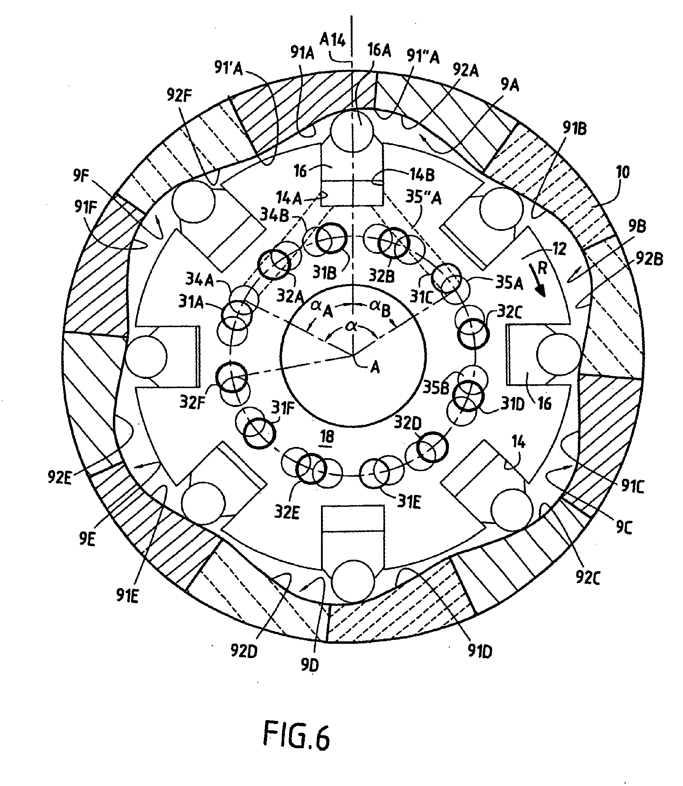

On décrit maintenant la figure 6, qui utilise également les mêmes références que les figures 2 et 5. Sur cette figure, les deux orifices de communication d'un même cylindre sont disposés symétriquement par rapport à un plan défini par l'axe du cylindre considéré et par l'axe de rotation. Ainsi, les orifices 34A et 35A du cylindre 14A sont disposés symétriquement par rapport au plan défini par l'axe A et par l'axe A14 du cylindre 14A.

On comprend en effet que l'espace angulaire αA entre un rayon partant de l'axe A et passant par le centre de l'orifice 34A et la projection, sur la face de communication 18 de l'axe A14, est égal à l'espace angulaire αB entre cette projection sur la face de communication de l'axe A14 et un rayon passant par le centre de l'orifice 35A. La somme de ces espaces angulaires est égale à l'espace angulaire α, lui-même égal à deux fois 360°/n, où n est le nombre de lobes de came.

Dans l'exemple de la figure 6, les orifices de distribution sont encore davantage décalés par rapport à la figure 2 que sur la figure 5, au point que les orifices de distribution associés à l'une des rampes d'un lobe de came ne se trouvent même pas dans le secteur angulaire couvert par cette rampe. Ainsi, l'orifice 31A se trouve dans un secteur angulaire couvert par la rampe 91F, tandis que l'orifice 32A se trouve dans l'espace couvert par la rampe 92F, mais c'est bien lorsque l'orifice de communication 34A communique avec l'orifice 31A (et que, simultanément, l'orifice de communication 35A communique avec l'orifice de distribution 31C) que le piston qui est disposé dans le cylindre 14A coopère avec la rampe 91A.

Dans certaines conditions, la symétrie qui est respectée entre les deux orifices de communication d'un même cylindre par rapport à la projection sur la face de communication de l'axe du cylindre facilite l'usinage des conduits de cylindres.

Comme on l'a indiqué en référence aux figures 3 et 4, on peut choisir que les conduits de cylindre présentent un tronçon axial et que, pour les deux conduits de cylindre du même cylindre, les tronçons non axiaux de ces conduits ne se trouvent pas dans un même plan, ceci afin d'éviter les intersections entre, par exemple, le conduit du cylindre 14A qui débouche dans l'orifice de communication 35A et le conduit de cylindre du cylindre 14B qui débouche dans l'orifice de communication 34B.

Entre les figures 2, 5 et 6, ni le nombre de lobes de came, ni le nombres de cylindres ne varient. En l'espèce, le moteur comporte davantage de cylindres que de lobes de came.

Le moteur de la figure 7 est légèrement différent et on a utilisé pour le décrire des références augmentées de 100. On voit en effet sur cette figure que l'espacement angulaire couvert par un lobe de came tel que 109A ou 109B, qui est de 360°/n où n représente le nombre de lobes de came est inférieur à l'espacement angulaire α114, mesuré à partir du fond d'un cylindre 114, couvert par ce cylindre.

Sur cette figure, le galet 116A du piston 116 coopère avec la partie médiane de la rampe montante 191A du lobe de came 109A, et la communication entre les orifices de communication 134A et 135A du cylindre 114A dans lequel se déplace le piston et les orifices de distribution 131A et 131B est maximale. Ces deux orifices de distribution, 131A et 131B sont les deux orifices de distribution respectivement associés aux rampes montantes 191A et 191B de deux lobes de came 109A et 109B consécutifs. A la différence des figures précédentes, le nombre de lobes de came est suffisant pour que l'espace angulaire α couvert par un lobe de came soit inférieur à l'espace angulaire α114 couvert par un cylindre. Ainsi, tout en étant espacés d'un angle α égal à 360°/n où n est le nombre de lobes de came, les deux orifices de communication 134A et 135A du même cylindre 114A peuvent être sensiblement situés dans l'encombrement de ce cylindre. En d'autres termes, ces deux orifices de communication sont situés dans une surface de la face de communication 118 qui est définie par la projection sur cette face, opérée parallèlement à l'axe de rotation A, de deux génératrices G1 et G2 du cylindre 114A opposées l'une de l'autre selon un plan diamétral de ce cylindre qui est perpendiculaire à l'axe A-.

Cette disposition, qui n'est possible que lorsque le rapport entre le nombre de lobes de came et le nombre de cylindres est suffisamment élevé, permet de simplifier l'usinage des conduits de cylindre qui débouchent dans les deux orifices de communication d'un même cylindre, ceux-ci ne se croisant pas avec les conduits de cylindre d'un autre cylindre.

On remarque encore sur la figure 7 que les orifices de communication ont une forme particulière, leur côté étant concave. Cette disposition, connue en soi par le document FR-A-2 587 761 permet de faire en sorte que, lorsqu'un orifice de communication commence à communiquer avec un orifice de distribution, la section de communication entre ces deux orifices varie très rapidement au cours de la rotation relative du bloc-cylindres et de la came. Ceci limite les pertes de charge.

Ainsi, l'invention peut être utilisée conjointement avec d'autres configurations particulières, déjà connues pour limiter les pertes de charge.

Elle peut également être utilisée avec des orifices de communication de toutes formes, par exemple circulaire, éventuellement plus faciles à réaliser.

Le moteur représenté sur les figures peut avoir deux cylindrées actives de fonctionnement.

Ainsi, dans la grande cylindrée active du moteur, tous les lobes de came sont actifs, c'est-à-dire que tous les orifices de distribution associés aux rampes montantes sont reliés à la conduite d'alimentation et tous les orifices de distribution associés aux rampes descendantes sont reliés à la conduite d'échappement. Ainsi, au cours de la rotation relative du bloc-cylindres et de la came, les orifices de communication d'un cylindre sont alternativement reliés à la haute pression et à la basse pression.

Dans certains moteurs, la sélection de la cylindrée est opérée par les cames. Ceci signifie que, dans la petite cylindrée active de fonctionnement, certains lobes de came sont actifs. Par exemple, si l'on considère la figure 6, on peut faire en sorte que, dans la petite cylindrée active de fonctionnement, seuls les lobes de came 9A, 9C et 9E soient actifs, les orifices de distribution 31A, 31C et 31E associés à leurs rampes montantes respectives et les orifices de distribution 32A, 32C et 32E associés à leurs rampes descendantes respectives étant respectivement reliés à l'alimentation en fluide et à l'échappement. En revanche, dans la petite cylindrée active, les autres lobes de came sont inactifs, ce qui signifie que, par exemple pour le lobe 9B, les orifices de distribution 31B et 32B sont mis à la même pression qui, selon les cas, peut être la pression de l'échappement de fluide, une pression auxiliaire, voire même la pression d'alimentation.

On remarque que les lobes 9A, 9C et 9E qui sont actifs dans la petite cylindrée active de fonctionnement sont disposés de manière axisymétrique. Pour la clarté du dessin, les hachures des lobes de came actifs en petite cylindrée sont faites en trait plein, tandis que celles des lobes de came inactifs sont en traits interrompus.

Dans ce cas, si k est le nombre de lobes de came actifs en petite cylindrée active de fonctionnement, alors l'espacement angulaire entre les deux conduits de communication d'un même cylindre doit être égal à un multiple de 360°/k. En effet, comme on le voit sur la figure 6, pour que le moteur fonctionne en petite cylindrée active, il faut que le premier conduit de communication 34A du cylindre 14A puisse communiquer avec un orifice de distribution 31A associé à la rampe 91A du lobe de came 9A avec laquelle coopère le piston qui est disposé dans le cylindre considéré et que, en même temps, le deuxième conduit de communication 35A du même cylindre coopère avec un autre orifice de communication 31C qui est également associé à la rampe montante d'un lobe de came actif, en l'espèce la rampe 91C.

Sur la figure 6, le moteur comporte six lobes de came dont trois sont actifs en petite cylindrée active de fonctionnement et l'espacement angulaire α entre les deux orifices de communication d'un même cylindre est égal à 120°. Bien entendu, si le choix de disposer symétriquement les deux orifices de communication d'un même cylindre par rapport à un plan passant par l'axe de ce cylindre et par l'axe A de rotation du moteur peut être avantageux, il n'est pas nécessairement lié à la possibilité de réaliser l'invention dans un moteur ayant au moins deux cylindrées actives de fonctionnement, à sélection de cylindrée par les cames.

De plus, l'invention s'applique évidemment à des moteurs dont la sélection de la cylindrée s'opère directement par les cylindres. Elle s'applique aussi à des moteurs ou pompes à pistons axiaux à cames présentant plusieurs lobes.

Bien entendu, quand les conduits de cylindres sont longs et de forme complexe, et donc difficiles à usiner, il est possible de réaliser une pièce d'interface de communication qui pourra comporter des tronçons de conduits usinés ou réalisés en fonderie.

## Revendications

1. Mécanisme hydraulique tel qu'un moteur ou une pompe comprenant une came (10) et un bloc-cylindres (12) aptes à tourner l'un par rapport à l'autre autour d'un axe de rotation, le bloc-cylindres présentant une pluralité de cylindres (14, 14A, 14B ; 114A) reliés par des conduits de cylindre à des orifices de communication disposés dans une face de communication (18 ; 118) du bloc-cylindres, des pistons (16 ; 116) montés coulissants dans les cylindres étant aptes à coopérer avec la came, le moteur comprenant en outre un distributeur de fluide (20), solidaire de la came vis-à-vis de la rotation autour de l'axe de rotation (A) et ayant une face de distribution (22) qui présente des orifices de distribution (31A-31F, 32A-32F) comprenant des orifices (31A-31F) aptes à être reliés à une conduite d'alimentation et des orifices (32A-32F) aptes à être reliés à une conduite d'échappement, lesdites faces de distribution (22) et de communication (18) étant en regard l'une de l'autre de manière à faire communiquer les orifices de communication et les orifices de distribution au cours de la rotation relative du bloc-cylindres et du distributeur,
**caractérisé en ce que** au moins certains cylindres (14, 14A, 14B ; 114A) sont reliés à au moins deux orifices de communication (34A, 35A ; 34B, 35B ; 134A, 135A) espacés angulairement de telle sorte que lorsqu'un premier orifice de communication (34A ; 34B ; 134A) d'un tel cylindre communique avec un premier orifice de distribution (31A ; 31B ; 131A) relié à la conduite d'alimentation ou à la conduite d'échappement, un deuxième orifice de communication (35A ; 35B ; 135A) du même cylindre communique avec un deuxième orifice de distribution (31B ; 31C ; 131B) relié à la même conduite.

2. Mécanisme hydraulique selon la revendication 1, **caractérisé en ce que**, la came (10, 110) présentant n lobes de came, l'espacement angulaire (α) entre deux orifices de communication (34A, 35A ; 134A, 135A) d'un même cylindre (14A ; 114A) est sensiblement égal à un multiple de 360°/n.

3. Mécanisme hydraulique selon la revendication 1 ou 2, **caractérisé en ce que** au moins certains cylindres (114A) sont reliés à deux orifices de communication (134A, 135A) qui sont situés dans une surface de la face de communication (118) définie par la projection sur cette face, opérée parallèlement à l'axe de rotation (A), de deux génératrices (G1, G2) du cylindre (114A) considéré opposées l'une de l'autre selon un plan diamétral dudit cylindre qui est perpendiculaire audit axe (A).

4. Mécanisme hydraulique selon l'une quelconque des revendications 1 à 3, **caractérisé en ce que** au moins certains cylindres sont reliés à deux orifices de communication (34A, 35A) qui sont disposés symétriquement par rapport à un plan défini par l'axe (A14) du cylindre considéré et par l'axe de rotation (A) (fig. 6).

5. Mécanisme hydraulique selon l'une quelconque des revendications 1 à 4, **caractérisé en ce que** au moins certains cylindres (14A) sont reliés à deux orifices de communication (34A, 35A) dont l'un (34A) coupe un plan défini par l'axe (A14) du cylindre (14A) considéré et par l'axe de rotation (A) (fig. 2).

6. Mécanisme hydraulique selon l'une quelconque des revendications 1 à 5, **caractérisé en ce que** chaque cylindre (14, 14A, 14B) est relié à deux orifices de communication (34A, 35A, 34B, 35B).

7. Mécanisme hydraulique selon la revendication 6, **caractérisé en ce que** l'espacement angulaire (α) entre les deux orifices de communication (34A, 35A ; 34B, 35B) d'un même cylindre (14A ; 14B) est le même pour tous les cylindres (14).

8. Mécanisme hydraulique selon la revendication 7, **caractérisé en ce que**, la came (10) présentant n lobes de came (9A-9F), ledit espacement angulaire (α) est égal à 360°/n.

9. Mécanisme hydraulique selon l'une quelconque des revendications 1 à 10, **caractérisé en ce que** la came (10) présente plusieurs lobes de came (9A-9F) comportant chacun une rampe montante (91A, 91F) et une rampe descendante (92A-92F) associées chacune à un orifice de distribution, un lobe de came étant considéré comme actif lorsque l'orifice de distribution associé à sa rampe montante est relié à la conduite d'alimentation et lorsque l'orifice de distribution associé à sa rampe descendante est relié à la conduite d'échappement, le mécanisme hydraulique présentant une grande cylindrée active de fonctionnement dans laquelle tous les lobes de came (9A, 9C, 9E) sont actifs et une petite cylindrée active de fonctionnement dans laquelle seuls certains lobes de came sont actifs et **en ce que** les lobes de came qui sont actifs dans la petite cylindrée active de fonctionnement sont disposés de manière axisymétrique (fig. 6).

## Claims

1. A hydraulic mechanism such as a motor or a pump comprising a cam (10) and a cylinder block (12) suitable for rotating relative to each other about an axis of rotation, the cylinder block having a plurality of cylinders (14, 14A, 14B; 114A) connected via cylinder ducts to communication orifices disposed in a communication face (18; 118) of the cylinder block, pistons (16; 116) slidably mounted in the cylinders being suitable for co-operating with the cam, the motor further comprising a fluid distributor (20), constrained in rotation with the cam about the axis of rotation (A), and having a distribution face (22) which presents distribution orifices (31A-31F, 32A-32F) comprising orifices (31A-31F) suitable for being connected to a feed duct and orifices (32A-32F) suitable for being connected to a discharge duct, said distribution face (22) and said communication face (18) facing each other so as to put the communication orifices into communication with the distribution orifices as the cylinder block and the distributor rotate relative to each other;
said hydraulic mechanism being **characterized in that** at least certain cylinders (14, 14A, 14B; 114A) are connected to at least two communication orifices (34A, 35A; 34B, 35B; 134A, 135A) spaced apart angularly so that, when a first communication orifice (34A; 34B; 134A) of such a cylinder communicates with a first distribution orifice (31A; 31B; 131A) connected to the feed duct or to the discharge duct, a second communication orifice (35A; 35B; 135A) of the same cylinder communicates with a second distribution orifice (31B; 31C; 131B) connected to the same duct.

2. A hydraulic mechanism according to claim 1, **characterized in that**, with the cam (10, 110) having n cam lobes, the angular spacing (α) between two communication orifices (34A, 35A; 134A, 135A) of the same cylinder (14A; 114A) is substantially equal to a multiple of 360°/n.

3. A hydraulic mechanism according to claim 1 or claim 2, **characterized in that** at least certain cylinders (114A) are connected to two communication orifices (134A, 135A) which are situated in an area of the communication face (118) that is defined by the projection, onto said face and parallel to the axis of rotation (A), of two generator lines (G1, G2) of the cylinder (114A) in question that are opposite each other on a diametrical plane of said cylinder that is perpendicular to said axis (A).

4. A hydraulic mechanism according to any one of claims 1 to 3, **characterized in that** at least certain cylinders are connected to two communication orifices (34A, 35A) which are disposed symmetrically about a plane defined by the axis (A14) of the cylinder in question and by the axis of rotation (A) (Figure 6).

5. A hydraulic mechanism according to any one of claims 1 to 4, **characterized in that** at least certain cylinders (14A) are connected to two communication orifices (34A, 35A), one of which (34A) intersects a plane defined by the axis (A14) of the cylinder (14A) in question and by the axis of rotation (A) (Figure 2).

6. A hydraulic mechanism according to any one of claims 1 to 5, **characterized in that** each cylinder (14, 14A, 14B) is connected to two communication orifices (34A, 35A, 34B, 35B).

7. A hydraulic mechanism according to claim 6, **characterized in that** the angular spacing (α) between the two communication orifices (34A, 35A; 34B, 35B) of the same cylinder (14A; 14B) is the same for all of the cylinders (14).

8. A hydraulic mechanism according to claim 7, **characterized in that**, with the cam (10) having n cam lobes (9A-9F), said angular spacing (α) is equal to 360°/n.

9. A hydraulic mechanism according to any one of claims 1 to 10, **characterized in that** the cam (10) has a plurality of cam lobes (9A-9F), each of which comprises a rising ramp (91A, 91F) and a falling ramp (92A-92F), each of which is associated with a respective distribution orifice, a cam lobe being considered to be active when the distribution orifice associated with its rising ramp is connected to the feed duct and when the distribution orifice associated with its falling ramp is connected to the discharge duct, the hydraulic mechanism having a large active operating cubic capacity in which all of the cam lobes (9A, 9C, 9E) are active, and a small active operating capacity in which only some of the cam lobes are active, and **in that** the cam lobes that are active in the small active operating cubic capacity are disposed asymmetrically (Figure 6).

## Patentansprüche

1. Hydraulischer Mechanismus wie ein Motor oder eine Pumpe, umfassend eine Nocke (10) und einen Zylinderblock (12) die geeignet sind, sich umeinander um eine Drehachse zu drehen, wobei der Zylinderblock eine Mehrzahl von Zylindern (14, 14A, 14B ; 114A) aufweist, die durch Zylinderleitungen mit Kommunikationsöffnungen verbunden sind, die an einer Kommunikationsseite (18 ; 118) des Zylinderblocks angeordnet sind, wobei Kolben (16 ; 116), die in den Zylindern so aufgebaut werden, daß Sie verschiebbar sind, geeignet sind, mit dem Nocken zusammen zu wirken, wobei der Motor einen Fluidverteiler (20) umfaßt, der mit der Nocke gegenüber der Drehung um die Drehachse (A) fest verbunden ist und der eine Verteilerseite (22) hat, die Steuerungsöffnungen (31A-31F, 32A-32F) aufweist, umfassend Öffnungen (31A-31 F) die geeignet sind, mit einer Versorgungsleitung verbunden zu werden und Öffnungen (32A-32F) die geeignet sind, mit einer Auspuffleitung verbunden zu werden, wobei die Seiten zur Steuerung (22) und zur Kommunikation (18) einander derart gegenüber stehen, daß die Kommunikationsöffnungen und die Steuerungsöffnungen während der relativen Drehung des Zylinderblocks und des Verteilers kommunizieren, **dadurch gekennzeichnet, daß** mindestens bestimmte Zylinder (14, 14A, 14B ; 114A) mit mindestens zwei Kommunikationsöffnungen (34A, 35A ; 34B, 35B ; 134A, 135A) verbunden sind, die einen Winkelabstand derart aufweisen, daß, wenn eine erste Kommunikationsöffnung (34A ; 34B ; 134A) eines solchen Zylinders mit einer ersten Verteileröffnung (31 A ; 31B; 131 A), die mit der Versorgungsleitung oder mit der Auslaßleitung verbunden ist und eine zweite Kommunikationsöffnung (35A ; 35B ; 135A) desselben Zylinders mit einer zweiten Verteileröffnung (31B ; 31C ; 131B) kommuniziert, die mit demselben Leitung verbunden ist.

2. Hydraulischer Mechanismus nach Anspruch 1, **dadurch gekennzeichnet, daß,** da die Nocke (10, 110) n Nockenkeulen aufweist und der Winkelabstand (α) zwischen zwei Kommunikationsöffnungen (34A, 35A ; 134A, 135A) eines selben Zylinders (14A ; 114A) im wesentlichen gleich ein Vielfaches von 360°/n ist.

3. Hydraulischer Mechanismus nach einem der Ansprüche 1 oder 2, **dadurch gekennzeichnet, daß** mindestens bestimmte Zylinder (114A) mit zwei Kommunikationsöffnungen (134A, 135A) verbunden sind, die in einer Fläche der Kommunikationsseite (118) angeordnet sind, die definiert ist durch die parallel zur Drehachse (A) durchgeführte Projektion auf diese Seite von zwei Mantellinien (G1, G2) des betrachteten Zylinders (114A), die gegenüberliegend zueinander gemäß einer Durchmesserebene des genannten Zylinders liegen, die senkrecht zur Achse (A) liegt.

4. Hydraulischer Mechanismus nach einem der Ansprüche 1 bis 3, **dadurch gekennzeichnet, daß** mindestens bestimmte Zylinder mit zwei Kommunikationsöffnungen (34A, 35A) verbunden sind, die bezüglich einer von der Achse (A14) des betrachteten Zylinders und der Drehachse (A) definierten Ebene symmetrisch angeordnet sind.

5. Hydraulischer Mechanismus nach einem der Ansprüche 1 bis 4, **dadurch gekennzeichnet, daß** mindestens bestimmte Zylinder (14A) mit zwei Kommunikationsöffnungen (34A, 35A) verbunden sind, von denen die eine (34A) eine von der Achse (A14) des betrachteten Zylinders (14A) und der Drehachse (A) definierte Ebene schneidet.

6. Hydraulischer Mechanismus nach einem der Ansprüche 1 bis 5, **dadurch gekennzeichnet, daß** jeder Zylinder (14, 14A, 14B) mit zwei Kommunikationsöffnungen (34A, 35A, 34B, 35B) verbunden ist.

7. Hydraulischer Mechanismus nach Anspruch 6, **dadurch gekennzeichnet, daß** der Winkelabstand (α) zwischen den zwei Kommunikationsöffnungen (34A, 35A ; 34B, 35B) eines selben Zylinders (14A ; 14B) für alle Zylinder (14) derselbe ist.

8. Hydraulischer Mechanismus nach Anspruch 7, **dadurch gekennzeichnet, daß;** da die Nocke (10) n Nockenkeulen aufweist, der Winkelabstand (α) gleich 360°/n ist.

9. Hydraulischer Mechanismus nach einem der Ansprüche 1 bis 10, **dadurch gekennzeichnet, daß** die Nocke (10) mehrere Nockenkeulen (9A-9F) aufweist, die jeweils eine steigende Rampe (91A, 91 F) und eine absteigende Rampe (92A-92F) aufweisen, die jede mit einer Steuerungsöffnung verknüpft ist, wobei eine Nockenkeule dann als aktiv betrachtet wird, wenn die ihrer steigenden Rampe zugeordnete Verteileröffnung mit der Versorgungsleitung verbunden ist und wenn die ihrer absteigenden Rampe zugeordnete Steuerungsöffnung mit der Auspuffleitung verbunden ist, wobei der hydraulische Mechanismus einen großen aktiven Betriebshubraum aufweist, in dem alle Nockenkeulen (9A, 9C, 9E) aktiv sind und einen kleinen aktiven Betriebshubraum, in dem nur bestimmte Nockenkeulen aktiv sind und daß die Nockenkeulen, die in dem kleinen aktiven Betriebshubraum aktiv sind, axialsymmetrisch angeordnet sind.
